# FASCICULE DE BREVET EUROPEEN

(11) **EP 2 510 223 B1**
(45) Date de publication et mention de la délivrance du brevet: **02.04.2014**
(21) Numéro de dépôt: 10805468.5
(22) Date de dépôt: 07.12.2010
(51) Int. Cl.: F03B 1/04, F03B 11/00

(54) **ENSEMBLE DE DISTRIBUTION DE FLUIDE POUR ROUE DE TURBINE PELTON**
VERTEILUNGSANORDNUNG EINER FLÜSSIGKEIT FÜR EIN PELTONTURBINENRAD
FLUID DISTRIBUTION ASSEMBLY FOR A PELTON TURBINE WHEEL

(30) Priorité: 08.12.2009 FR 0958741
(43) Date de publication de la demande: 17.10.2012
(73) Titulaire: ALSTOM Renewable Technologies, 38100 Grenoble (FR)
(72) Inventeur: FOGGIA, Théophane, F-38000 Grenoble (FR); HOUDELINE, Jean Bernard, F-38850 Chirens (FR)
(74) Mandataire: Pesce, Michele
(86) Numéro de dépôt international: PCT/FR2010/052634
(87) Numéro de publication internationale: WO 2011/070289

(56) Documents cités:
- FR-A1- 2 919 353
- JP-A- 60 187 772

## Description

La présente invention concerne un ensemble de distribution pour alimenter en eau une roue de turbine Pelton. D'autre part, la présente invention concerne une turbine Pelton comportant un tel ensemble de distribution.

Pour alimenter en eau une roue de turbine Pelton, il est connu de mettre en oeuvre un distributeur comprenant un conduit de distribution, sensiblement en forme de portion de tore, et plusieurs conduits d'injection répartis autour de la roue de façon à injecter des jets d'eau dans ses augets. Le conduit de distribution canalise de l'eau vers chaque conduit d'injection. Chacun des conduits d'injection est relié au conduit de distribution, si bien que le débit d'eau est localement réparti entre le conduit de distribution, d'une part, et l'un des conduits d'injection, d'autre part.

Dans un ensemble de distribution de l'art antérieur, le conduit de distribution et chaque conduit d'injection ont des formes tubulaires à sections cylindriques. L'eau qui s'y écoule suit des trajectoires courbes, le long desquelles elle est soumise à des accélérations centrifuges. Ces accélérations centrifuges génèrent un gradient de pression entre la paroi interne et la paroi externe à la courbure d'un conduit d'injection. L'eau située à proximité des parois interne et externe n'est pas ou peu soumise à l'accélération centrifuge, car sa vitesse d'écoulement près de ces parois est faible ou nulle. Par conséquent, le gradient de pressions généré dans la région du conduit d'injection induit une circulation du liquide le long des parois entre le rayon de courbure externe et le rayon de courbure interne. L'eau qui s'écoule principalement le long du conduit d'injection présente donc des écoulements secondaires transversalement à la direction longitudinale du conduit d'injection.

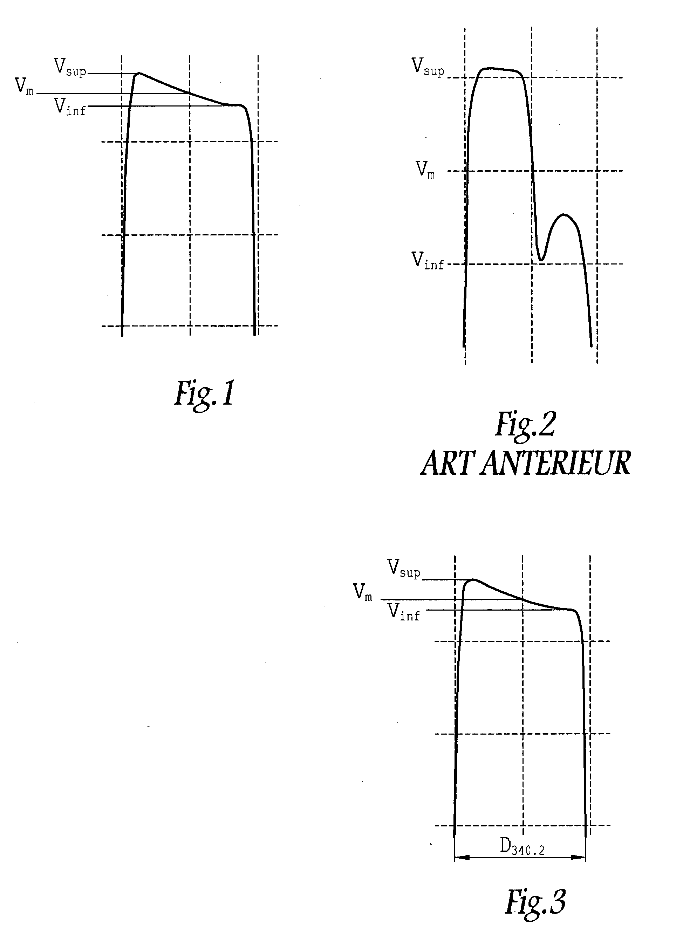

La figure 1 montre un profil de vitesses mesurées en amont d'une intersection entre le conduit de distribution et un conduit d'injection. Ce profil de vitesses « amont » est globalement uniforme. La figure 2 montre un profil de vitesses mesurées dans le conduit d'injection, suivant un plan transversal à la direction principale du conduit d'injection et en aval de l'intersection avec le conduit de distribution. Ce profil de vitesses « aval » présente une dissymétrie marquée en raison des écoulements secondaires précités. Plus précisément, cette dissymétrie ou l'écart entre la vitesse moyenne Vₘ d'une part et la vitesse minimale V_{inf} ou la vitesse maximale Vₛᵤₚ d'autre part est d'environ 50% de la valeur de la vitesse moyenne Vₘ. Or, une telle dissymétrie du profil de vitesses provoque une déformation du jet d'eau issu du conduit d'injection, ce qui réduit l'énergie cinétique disponible pour actionner la roue de la turbine Pelton.

FR-A-2 919 355 et FR-A-2 919 353 décrivent des machines Pelton comportant chacune un conduit de distribution et plusieurs conduits d'injection montés en dérivation du conduit de distribution. Ces machines Pelton comportent en outre des canalisations auxiliaires dont l'entrée commune est raccordée à un collecteur formant l'entrée du conduit de distribution. La sortie de chaque canalisation auxiliaire est raccordée au conduit de distribution en amont d'un conduit d'injection associé.

Cependant, les machines Pelton de FR-A-2 919 355 et FR-A-2 919 353 présentent des inconvénients de même nature que ceux mentionnés ci-avant. En outre, la structure des canalisations auxiliaires complique la constrution de l'ensemble de distribution.

La présente invention vise notamment à remédier à ces inconvénients, en proposant un ensemble de distribution permettant de maximiser la conversion de l'énergie cinétique de l'eau en énergie mécanique de la roue.

A cet effet, l'invention a pour objet un ensemble de distribution tel que décrit à la revendication 1.

L'eau s'écoulant dans la ou les canalisation(s) auxiliaire(s) permet d'équilibrer le profil des vitesses d'écoulement dans le conduit de distribution et dans les conduits d'injection correspondant. Grâce à l'invention, un conduit d'injection projette un jet d'eau faiblement dispersé, avec des vitesses d'écoulements secondaires faibles et réduites par rapport à l'art antérieur.

Des caractéristiques avantageuses mais facultatives de l'invention sont précisées aux revendications 2 à 9.

Par ailleurs, la présente invention a pour objet une turbine Pelton telle que décrite à la revendication 10.

L'invention sera bien comprise et ses avantages ressortiront aussi à la lumière de la description qui va suivre, donnée uniquement à titre d'exemple non limitatif et faite en référence aux dessins annexés, dans lesquels :
- la figure 1 est un diagramme d'un profil de vitesses mesurées en amont d'une intersection entre un conduit d'injection et un conduit de distribution d'un ensemble de distribution de l'art antérieur, comme cela a été décrit ci-dessus ;
- la figure 2 est un diagramme analogue à la figure 1 d'un profil de vitesses mesurées dans un conduit d'injection d'un ensemble de distribution de l'art antérieur, suivant un plan transversal à la direction principale du conduit d'injection et en aval de l'intersection avec le conduit de distribution, comme cela a été décrit ci-dessus ;
- la figure 3 est un diagramme analogue à la figure 2 d'un profil de vitesses mesurées, suivant la ligne radiale III-III à la figure 4 ou 5, dans un conduit d'injection d'un ensemble de distribution conforme à l'invention, au même niveau que le profil de vitesses illustré à la figure 2 ;
- la figure 4 est une vue de dessus d'un ensemble de distribution conforme à l'invention ;
- la figure 5 est une vue à plus grande échelle du détail V à la figure 4 ;
- la figure 6 est une coupe dans le plan VI à la figure 4 ;
- la figure 7 est une coupe d'une partie de l'ensemble de distribution de la figure 4 suivant le plan VII à la figure 5 ; et
- la figure 8 est une vue à plus grande échelle du détail VIII à la figure 4.

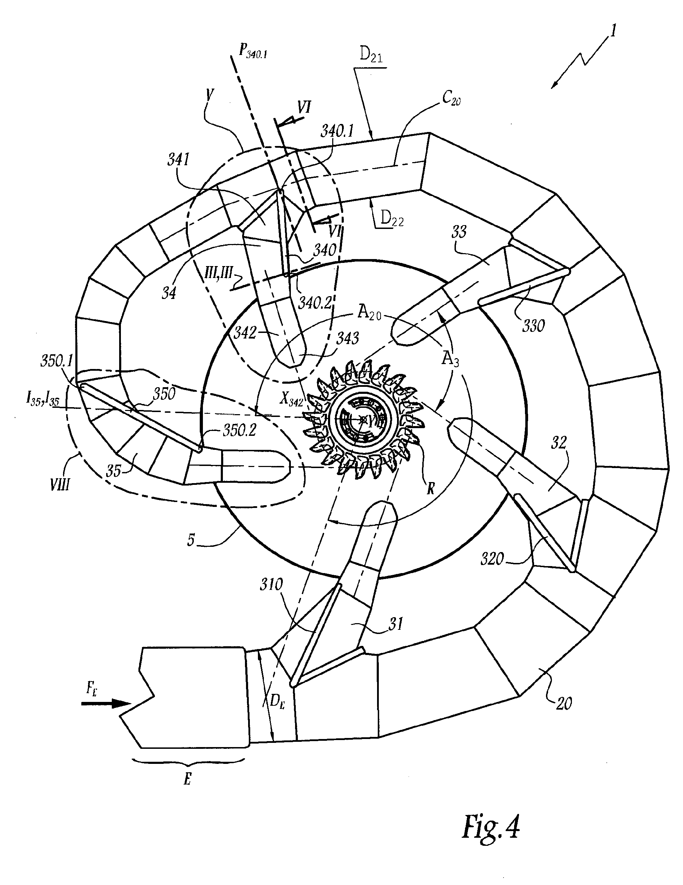

La figure 4 illustre un ensemble de distribution ou distributeur 1 destiné à alimenter en eau une roue R de turbine Pelton connue en soi. La roue R présente globalement une symétrie de révolution suivant un axe Y, lequel forme un axe de rotation autour duquel la roue R est destinée à tourner. L'axe Y est perpendiculaire au plan de la figure 4.

Une conduite d'entrée E amène au distributeur 1 un flux d'eau qui est symbolisé par une flèche F_{E}. La conduite d'entrée E est située en amont du distributeur 1. Dans la présente demande, les termes « amont » et « aval » font référence au sens général d'écoulement de l'eau, depuis la conduite d'entrée E jusqu'à la roue R.

Le distributeur 1 comprend un conduit de distribution 20 et plusieurs conduits d'injection 31, 32, 33, 34 et 35 formés par des piquages dirigés, à partir du conduit de distribution 20, vers la roue R. Le flux d'eau F_{E} entrant dans le conduit de distribution 20 sort par les conduits d'injection 31 à 35. Chaque conduit d'injection 31 à 35 éjecte ensuite un jet d'eau, J₃₄ et équivalent, vers les augets de la roue R. Puis, l'eau est collectée par un bâti 5 avant d'être évacuée par au moins une conduite de sortie non représentée.

Comme le montre la figure 4, le conduit de distribution 20 a globalement une forme de portion de tore dont l'axe de révolution est sensiblement parallèle à l'axe Y. Le terme « portion » indique que le tore s'étend « en rond » sur un angle rentrant de tore A₂₀ inférieur à 350°. En l'occurrence, l'angle de tore A₂₀ vaut environ 280°. En d'autres termes, le conduit de distribution 20 est en forme de tore « ouvert ».

Le conduit de distribution 20 comprend plusieurs tronçons de distribution élémentaires. Les tronçons de distribution élémentaires sont juxtaposés le long d'un arc de cercle défini par l'angle de tore A₂₀. Chaque tronçon de distribution élémentaire est disposé entre deux conduits d'injection respectifs 31 à 35.

Chaque conduit d'injection 31 à 35 est relié au conduit de distribution 20. Ainsi, une partie du débit d'eau provenant de la conduite d'entrée E est dérivée vers chaque conduit d'injection 31 à 35 par le conduit de distribution 20. L'eau s'écoule donc du conduit de distribution 20 vers chaque conduit d'injection 31 à 35.

Les conduits d'injection 31 à 35 sont répartis autour de l'emplacement occupé par la roue R. Les conduits d'injection 31 à 35 sont répartis uniformément autour de l'axe Y et à la périphérie de la roue R. Deux conduits d'injection successifs, par exemple les injecteurs 34 et 35, sont donc séparés par un angle A3 d'environ 72°, dans l'exemple de la figure 4. L'angle séparant deux injecteurs successifs est fonction du nombre d'injecteurs et il pourrait donc être différent de 72°.

Chaque conduit d'injection 31 à 35 est agencé de façon à injecter l'eau dans les augets dans la roue R, ce qui permet d'entraîner la roue R en rotation autour de son axe Y. Le distributeur 1, la roue R et la conduite d'entrée E forment ensemble une machine hydraulique de type turbine Pelton.

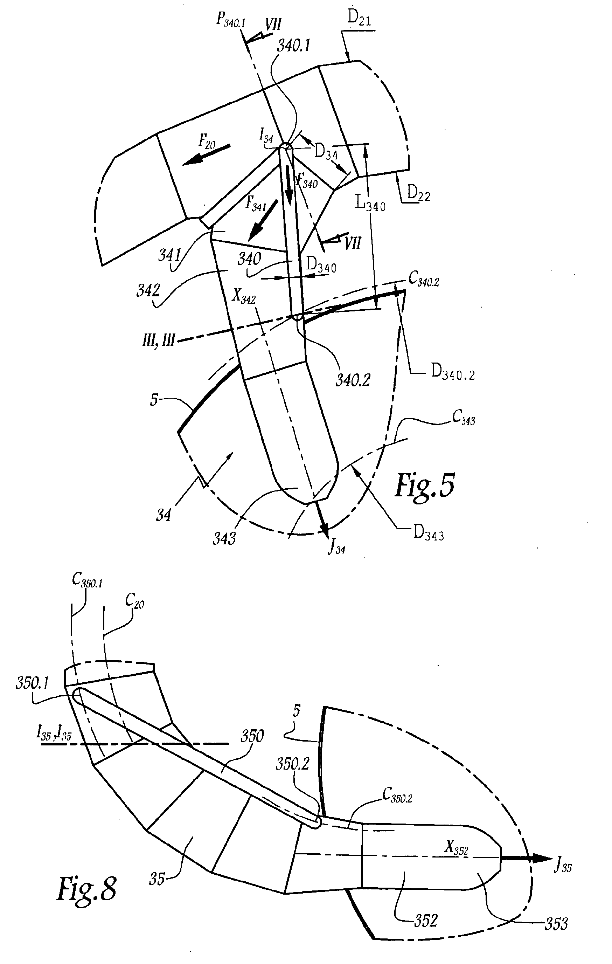

La structure du conduit d'injection 34 est décrite ci-après de façon plus détaillée, en relation avec la figure 5. Cette description peut être transposée directement aux conduits d'injection 31, 32 et 33, car ils sont semblables au conduit d'injection 34.

Le conduit d'injection 34 comporte une portion oblique 341, un tronçon rectiligne 342 et une buse 343. Le tronçon rectiligne 342 est disposé en aval de la portion oblique 341 et en amont de la buse 343.

La portion oblique 341, remplit une fonction de dérivation, car elle forme le piquage du conduit d'injection 34 sur le conduit de distribution 20. Chaque portion oblique 341 ou équivalent constitue un tronçon de dérivation connectant le conduit de distribution 31 à 34 respectif sur le conduit de distribution 20, de façon à collecter une partie du débit d'eau s'écoulant dans le conduit de distribution 20. Chaque portion oblique 341 ou équivalent définit une portion amont de forme convergente pour le conduit d'injection 34 respectif. Plus précisément, la portion oblique est de forme tronconique convergente.

L'adjectif « oblique » indique que la direction d'écoulement dans la portion oblique 341, laquelle est symbolisée par une flèche F₃₄₁ à la figure 5, est inclinée par rapport à la direction locale de l'écoulement dans le conduit de distribution 20 au niveau du conduit d'injection 34, cette direction locale étant symbolisée par une flèche F₂₀ à la figure 5.

Le tronçon rectiligne 342 remplit une fonction de canalisation, car il canalise l'eau depuis la portion oblique 341 jusqu'à la buse 343. La direction longitudinale X₃₄₂ du tronçon rectiligne 342 est tangente à une circonférence de la roue R prise au centre des augets, c'est-à-dire dont le diamètre forme le diamètre Pelton de la roue R. Selon une variante non représentée, chaque injecteur est dépourvu de portion oblique et se compose d'un tronçon rectiligne et d'un tronçon convergent directement reliés entre eux.

La buse 343 remplit une fonction d'éjection, car elle éjecte un jet d'eau J₃₄ vers les augets de la roue R. Un mécanisme non représenté est monté sur le distributeur 1 de façon à actionner une aiguille non représentée de la buse 343 et des buses équivalentes des autres conduits d'injection 31, 32, 33 et 35. Dans le jet d'eau J₃₄, les vitesses d'écoulement s'étendent essentiellement suivant la direction longitudinale X₃₄₂, comme cela est détaillé par la suite.

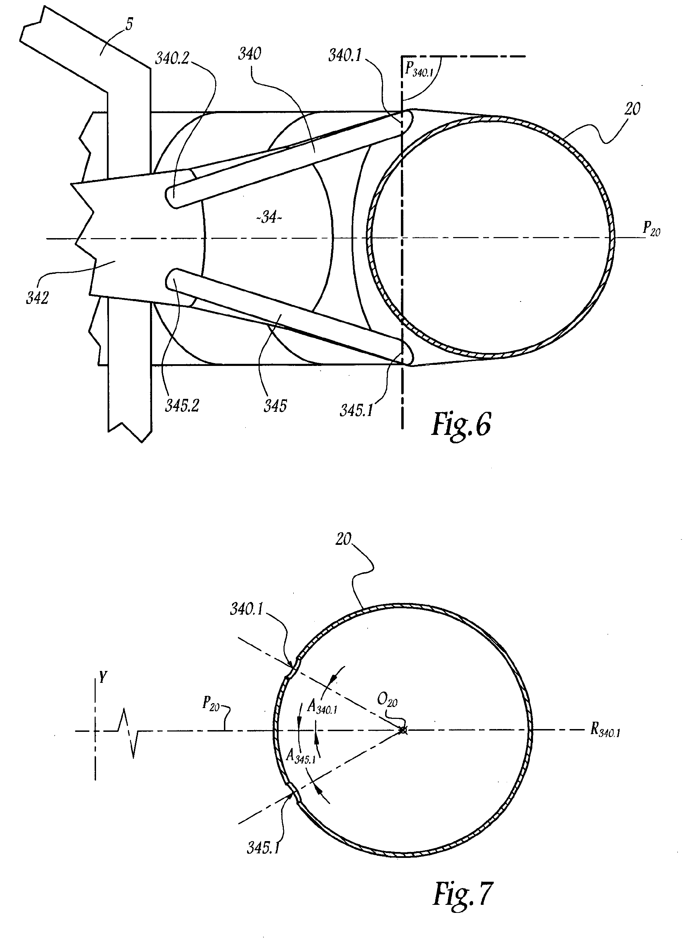

Par ailleurs, l'ensemble de distribution 1 comporte des canalisations auxiliaires dont cinq sont visibles à la figure 4 avec les références 310, 320, 330, 340 et 350. La structure et le fonctionnement de la canalisation 340 sont décrits ci-après de façon plus détaillée, en relation avec les figures 5 à 7. Cette description détaillée peut être transposée directement aux canalisations auxiliaires 310, 320 et 330, car ces dernières sont semblables à la canalisation auxiliaire 340. La structure et le fonctionnement de la canalisation auxiliaire 350 est également décrite ci-après de façon plus détaillée, en relation avec la figure 6.

La canalisation auxiliaire 340 comprend une sortie 340.2 qui est raccordée à la partie interne du conduit d'injection 34, comme le montre la figure 4 ou 5. La canalisation auxiliaire 340 comprend une entrée 340.1 qui est raccordée au conduit de distribution en amont du conduit d'injection 34. Dans l'exemple des figures, l'entrée 340.1 de la canalisation auxiliaire 340 est raccordée directement en amont du conduit d'injection 34.

Les termes « entrée » et « sortie » font référence au sens d'écoulement de l'eau dans une canalisation auxiliaire, telle que la canalisation auxiliaire 340 pour laquelle l'écoulement de l'eau est symbolisé par une flèche F₃₄₀ à la figure 5. Dans l'exemple des figures 4 à 8, les termes « entrée » et « sortie » désignent respectivement un orifice d'entrée unique et un orifice de sortie unique.

L'adverbe « directement » signifie que l'entrée d'une canalisation auxiliaire se trouve entre l'entrée du conduit d'injection auquel est raccordée la sortie de cette canalisation auxiliaire et l'entrée du conduit d'injection précédent dans le sens d'écoulement de l'eau. En d'autres termes, l'entrée d'une canalisation auxiliaire est raccordée à la portion du conduit de distribution située entre les deux conduits d'injection dont les entrées sont les plus proches en amont de la sortie de cette canalisation auxiliaire.

La canalisation auxiliaire 340 s'étend de manière rectiligne entre l'entrée 340.1 et la sortie 340.2. La canalisation auxiliaire 340.2 a une forme de cylindre à base circulaire. La base circulaire de la conduite auxiliaire 340 a un diamètre D₃₄₀. Le diamètre D₃₄₀ dépend de la géométrie du conduit de distribution 20.

L'écoulement d'un débit F₃₄₀ relativement important permet de compenser efficacement le gradient de pression généré dans le conduit d'injection 34 par l'accélération centrifuge,

L'entrée 340.1 est ici positionnée au droit de l'intersection I₃₄**.** Plus précisément, l'entrée 340.1 est raccordée au conduit de distribution 20 au voisinage de l'intersection I₃₄. Cette position de l'entrée 340.1 permet d'utiliser la haute pression disponible au niveau de la partie divergente du conduit de distribution 20 divergent.

Dans la présente demande, les adjectifs « interne » et « externe » font référence à la courbure de la pièce à laquelle ils se rapportent. En d'autres termes, les adjectifs « interne » et « externe » désignent respectivement la région convexe et la région concave qui bordent cette pièce, telle que le conduit de distribution ou un conduit d'injection. Ainsi, pour le conduit d'injection 34, le bord interne est situé sur la droite de la figure 4 et le bord externe est situé sur la gauche de la figure 4.

Par «transversale » on désigne une section ou un plan transversal(e) à la direction principale d'écoulement de l'eau au niveau de cette section ou de ce plan. La section transversale d'une pièce courbe, telle que le conduit de distribution 20, est donc perpendiculaire à une direction localement tangente à la courbure de cette pièce.

De plus, la sortie 340.2 est raccordée à la partie interne du conduit d'injection 34 en aval de la portion oblique 341 qui forme une portion amont de forme convergente pour le conduit d'injection 34. Comme la portion oblique 341 est convergente, la pression diminue, car le fluide accélère.

Dans l'exemple des figures 4 à 6, la sortie 340.2 est positionnée à l'extérieur du bâti 5, ce qui facilite le montage de la canalisation auxiliaire 340, car il n'est pas nécessaire de percer le bâti 5.Selon une variante non représentée, une ou plusieurs canalisation(s) auxiliaire(s) traverse(nt) le bâti.

Dans le plan méridien P_{340.1} passant par l'entrée 340.1, c'est-à-dire dans le plan de la figure 7, la position de l'entrée 340.1 sur la circonférence du conduit de distribution 20 est déterminée par un angle dit d'entrée A_{340.1}, qui est un angle géométrique mais pas un angle orienté. Le plan méridien P_{340.1} est qualifié de « méridien » car il comprend l'axe Y.

Comme le montre la figure 7, dans le plan méridien P_{340.1}, l'angle d'entrée A_{340.1} est formé entre la direction radiale R_{340.1} qui est perpendiculaire à l'axe Y et le segment reliant l'entrée 340.1 à l'axe médian C₂₀ du conduit de distribution 20 qui est visible à la figure 4 et qui coupe le plan P_{340.1} de la figure 7 au centre O₂₀ du conduit de distribution 20. En d'autres termes, l'angle d'entrée A_{340.1} est l'angle au centre O₂₀ formé entre l'entrée 340.1 et le plan équatorial P₂₀. Le plan équatorial P₂₀ est perpendiculaire à l'axe Y et parallèle au plan de la figure 4 ; il est qualifié « d'équatorial » car il forme un plan de symétrie pour la forme globalement torique du conduit de distribution 20.

Dans l'exemple des figures 4 à 6, l'angle d'entrée A_{340.1} est de 30°. En pratique, l'angle d'entrée A_{340.1} est compris entre 0°et 90°.

Dans un plan passant par la sortie 340.2 et orthogonal à la direction longitudinale X₃₄₂, tel que le plan contenant la ligne radiale III-III à la figure 4 ou 5, la position de la sortie 340.2 est déterminée par un angle dit de sortie , qui est un angle géométrique mais pas un angle orienté. L'angle de sortie est formé entre le plan équatorial P₂₀ du conduit de distribution 20 et le segment reliant la sortie 340.2 à l'axe médian du conduit d'injection 34, en l'occurrence la direction longitudinale X₃₄₂.

Dans l'exemple des figures 4 à 7, l'angle de sortie est de 40°. En pratique, l'angle de sortie est compris entre 0° et 45°.

Par ailleurs, dans l'exemple des figures 4 à 8, chaque conduit d'injection 31 à 35 est raccordé à deux canalisations auxiliaires. Comme le montrent les figures 6 et 7, l'ensemble de distribution 1 comporte, pour le conduit d'injection 34, deux canalisations auxiliaires 340.1 et 345.1 qui s'étendent respectivement de part et d'autre du plan équatorial P₂₀.

La canalisation auxiliaire 345 s'étend symétriquement à la canalisation auxiliaire 340 par rapport au plan équatorial P₂₀. La description géométrique de la canalisation 340 peut donc être transposée à la canalisation 345. L'entrée 345.1 de la canalisation auxiliaire 345 est positionnée au droit de l'entrée 340.1 suivant l'axe Y. De même, la sortie 345.2 de la canalisation auxiliaire 345 est positionnée au droit de la sortie 340.2 suivant l'axe Y.

De plus, l'angle d'entrée et l'angle de sortie caractérisant la canalisation auxiliaire 345 sont respectivement identiques, à l'angle d'entrée et à l'angle de sortie qui caractérisent la canalisation auxiliaire 340.

La figure 8 illustre le conduit d'injection terminal 25 qui prolonge l'extrémité aval du conduit de distribution 20. Le conduit d'injection terminal 25 diffère des conduits d'injection 31 à 34, car il ne forme pas un piquage ou une dérivation depuis le conduit de distribution 20. En d'autres termes toute l'eau s'écoulant dans l'extrémité aval du conduit de distribution 20 sort par le conduit d'injection terminal 35.

Le conduit d'injection terminal 35 est également raccordé à deux canalisations auxiliaires, dont l'une est visible à la figure 8 avec la référence 350. L'entrée 350.1 de la canalisation auxiliaire 350 est située sur la partie radialement externe du conduit de distribution 20. En d'autres termes, le rayon du cercle C_{350.1} centré sur l'axe Y et sur lequel se trouve l'entrée 350.1 est supérieure au rayon du cercle C₂₀ qui définit l'axe médian du conduit de distribution 20, c'est-à-dire le rayon majeur de la portion de tore.

La sortie 350.2 de la canalisation auxiliaire 350 est située sur la partie radialement interne du conduit d'injection terminale 35. En d'autres termes, le rayon du cercle C_{350.2} centré sur l'axe Y et sur lequel se trouve la sortie 350.2 est inférieur au rayon de l'axe médian C₂₀.

De telles positions de l'entrée 350.1 et de la sortie 350.2 contribuent à optimiser la compensation de l'accélération centrifuge exercée sur l'eau s'écoulant dans le conduit d'injection terminal 35, ce qui génère un profil uniforme des vitesses mesurées dans le conduit d'injection terminal suivant un plan transversal à la direction longitudinale X₃₅₂ du tronçon rectiligne 352.

Par ailleurs, le conduit de distribution 20 se termine au niveau d'un plan méridien I₃₅ visible à la figure 4 ou 8. Le plan I₃₅ marque une limite de l'angle de tore A₂₀, c'est-à-dire l'extrémité aval du conduit de distribution 20. En d'autres termes, le plan I₃₅ forme l'intersection entre le conduit de distribution 20 et le conduit d'injection terminal 35.

Le diagramme de la figure 3 illustre le profil « aval » des vitesses mesurées dans le conduit d'injection 34 suivant la ligne radiale III-III, c'est-à-dire au niveau de la sortie 340.2 ou encore au même niveau que le profil de vitesses illustré à la figure 2. L'écart entre la vitesse moyenne Vₘ d'une part et la vitesse minimale V_{inf} ou la vitesse maximale Vₛᵤₚ d'autre part est d'environ 8% de la valeur de la vitesse moyenne Vₘ. Ce profil de vitesses est donc sensiblement uniforme.

Les paramètres géométriques définis ci-dessus, tels que angles d'entrée et de sortie, permettent donc de déterminer une canalisation auxiliaire qui contribue à optimiser la compensation de l'accélération centrifuge exercée sur l'eau s'écoulant dans le conduit d'injection 31 à 35 respectif, ce qui génère un profil relativement uniforme des vitesses mesurées dans le conduit d'injection suivant un plan transversal à la direction longitudinale X₃₄₂ du tronçon rectiligne 342.

Un ensemble de distribution conforme à la présente invention permet donc de réduire les pertes d'énergie cinétique dans l'écoulement d'eau à l'intérieur de chaque conduit d'injection 31 à 35, donc d'augmenter l'énergie mécanique de rotation transmise à la roue R, ce qui améliore le rendement global de la machine hydraulique. Une turbine Pelton conforme à l'invention présente un rendement global amélioré.

Selon une variante non représentée, une ou plusieurs canalisation(s) auxiliaire(s) comprennent plusieurs orifices d'entrée et/ou plusieurs orifices de sortie raccordés à un tronçon commun de la canalisation auxiliaire. L'ensemble des orifices d'entrée et l'ensemble des orifices de sortie sont respectivement désignés sous les termes « entrée » et « sortie ».

Selon une variante non représentée, chaque canalisation auxiliaire a une forme courbe.

Selon une variante non représentée, chaque canalisation auxiliaire peut avoir une forme de cylindre à base non circulaire ou une forme non cylindrique, par exemple une forme prismatique.

Selon une variante non représentée, tous les conduits d'injection d'un ensemble de distribution conforme à l'invention ne sont pas raccordés à une canalisation auxiliaire, mais seulement certains d'entre eux.

Selon encore une variante non représentée, un ou plusieurs conduits d'injection d'un ensemble de distribution conforme à l'invention est(sont) raccordé(s) à une seule canalisation auxiliaire.

Selon une autre variante non représentée, un ou plusieurs conduits d'injection d'un ensemble de distribution conforme à l'invention est(sont) raccordé(s) à plus de deux canalisations auxiliaires, par exemple quatre.

## Revendications

1. Ensemble de distribution (1), pour alimenter en eau une roue (R) de turbine Pelton, l'ensemble de distribution (1) comprenant :
- un conduit de distribution (20) globalement en forme de portion de tore dont l'axe de révolution est sensiblement parallèle à l'axe de rotation (Y) de la roue (R) ;
- plusieurs conduits d'injection (31-35) répartis autour de l'emplacement de la roue (R), les conduits d'injection (31-35) étant agencés de façon à injecter l'eau dans les augets de la roue.(R), chaque conduit d'injection (31-35) étant relié au conduit de distribution (20) ;
- au moins une canalisation auxiliaire (310-340, 345, 350) ;
l'ensemble de distribution (1) étant **caractérisé en ce que** la canalisation auxiliaire (310-340, 345, 350) comprend une sortie (340.2, 345.2, 350.2) raccordée à la partie interne d'un conduit d'injection (31-35) et une entrée (340.1, 345.1, 350.1) raccordée au conduit de distribution (20) directement en amont dudit conduit d'injection (31-35) correspondant, entre l'entrée de ce conduit d'injection (31-35) et l'entrée (340.1, 345.1, 350.1) du conduit d'injection (31-35) précédent dans le sens de l'écoulement de l'eau.

2. Ensemble de distribution selon la revendication 1, **caractérisé en ce qu'**il comporte une canalisation auxiliaire pour au moins un conduit d'injection, ladite canalisation auxiliaire s'étendant près du plan équatorial du conduit de distribution.

3. Ensemble de distribution (1) selon la revendication 1, **caractérisé en ce qu'**il comporte deux canalisations auxiliaires (340, 345) pour au moins un conduit d'injection (34), lesdites deux canalisations auxiliaires (340, 345) s'étendant respectivement de part et d'autre du plan équatorial (P₂₀) du conduit de distribution (20).

4. Ensemble de distribution (1) selon la revendication 3, **caractérisé en ce que** lesdites deux canalisations auxiliaires (340, 345) s'étendent symétriquement par rapport au plan équatorial (P₂₀) du conduit de distribution (20).

5. Ensemble de distribution (1) selon l'une des revendications précédentes, **caractérisé en ce qu'**au moins un conduit d'injection (31-35) comporte une portion amont (341, 351) de forme convergente et **en ce qu'**au moins une sortie (340.2, 345.2, 350.2) de canalisation auxiliaire (310-340, 345, 350) est raccordée au conduit d'injection (31-35) correspondant en aval de ladite portion amont (341, 351) de forme convergente.

6. Ensemble de distribution (1) selon l'une des revendications précédentes, **caractérisé en ce qu'**un angle dit d'entrée (A_{340.1} ; A_{345.1}), formé, dans un plan méridien (P_{340.1}) comprenant une entrée (340.1, 345.1, 350.1) d'une canalisation auxiliaire (310-340, 345, 350), entre la direction radiale (R_{340.1}) perpendiculaire à l'axe de rotation (Y) et le segment (O₂₀-340.1) reliant ladite entrée (340.1, 345.1, 350.1) de canalisation auxiliaire (310-340, 345, 350) à l'axe médian (C₂₀) du conduit de distribution (20), est compris entre 0°et 90°.

7. Ensemble de distribution (1) selon l'une des revendications précédentes, **caractérisé en ce qu'**un angle dit de sortie, formé, dans un plan orthogonal (VII-VII) à la direction d'injection et comprenant une sortie (340.2, 345.2, 350.2) de canalisation auxiliaire (310-340, 345, 350), entre le plan équatorial (P₂₀) du conduit de distribution (20) et le segment reliant ladite sortie (340.2, 345.2, 350.2) de canalisation auxiliaire (310-340, 345, 350) à l'axe médian (X₃₄₂) du conduit d'injection (31-35) correspondant, est compris entre 0° et 45°.

8. Ensemble de distribution (1) selon l'une des revendications précédentes, **caractérisé en ce qu'**au, moins une canalisation auxiliaire (310-340, 345, 350) a une forme de cylindre à base circulaire.

9. Ensemble de distribution (1) selon l'une des revendications précédentes, **caractérisé en ce que** l'extrémité aval (I₃₅) du conduit de distribution (20) est prolongée par un conduit d'injection terminal (35) raccordé à au moins une canalisation auxiliaire (310-340, 345, 350) dont l'entrée (340.1, 345.1, 350.1) est située sur la partie externe du conduit de distribution (20) et dont la sortie (340.2, 345.2, 350.2) est située sur la partie interne du conduit d'injection terminal (35).

10. Turbine Pelton comprenant une roue (R), la turbine étant **caractérisée en ce qu'**elle comporte un ensemble de distribution (1) selon l'une des revendications précédentes.

## Patentansprüche

1. Verteilungsanordnung (1), um ein Rad (R) einer Pelton-Turbine zu versorgen, wobei die Verteilungsanordnung (1) Folgendes umfasst:
- eine Verteilungsleitung (20), die allgemein die Form eines Torusabschnitts hat, dessen Symmetrieachse zu der Drehachse (Y) des Rades (R) im Wesentlichen parallel ist;
- mehrere Einspritzleitungen (31-35), die um den Ort des Rades (R) verteilt sind, wobei die Einspritzleitungen (31-35) in der Weise beschaffen sind, dass in die Becher des Rades (R) Wasser eingespritzt wird, wobei jede Einspritzleitung (31-35) mit der Verteilungsleitung (20) verbunden ist;
- wenigstens eine Hilfsrohrleitung (310-340, 345, 350);
wobei die Verteilungsanordnung (1) **dadurch gekennzeichnet ist, dass** die Hilfsrohrleitung (310-340, 345, 350) einen Ausgang (340.2, 345.2, 350.2) aufweist, der mit dem inneren Teil der Einspritzleitung (31-35) verbunden ist, und einen Eingang (340.1, 345.1, 350.1) aufweist, der mit der Verteilungsleitung (20) in Strömungsrichtung des Wassers direkt vor der entsprechenden Einspritzleitung (31-35) zwischen dem Eingang dieser Einspritzleitung (31-35) und dem Eingang (340.1, 345.1, 350.1) der vorhergehenden Einspritzleitung (31-35) verbunden ist.

2. Verteilungsanordnung nach Anspruch 1, **dadurch gekennzeichnet, dass** sie eine Hilfsrohrleitung für wenigstens eine Einspritzleitung umfasst, wobei sich die Hilfsrohrleitung in der Nähe der Äquatorialebene der Verteilungsleitung erstreckt.

3. Verteilungsanordnung (1) nach Anspruch 1, **dadurch gekennzeichnet, dass** sie zwei Hilfsrohrleitungen (340, 345) für wenigstens eine Einspritzleitung (34) umfasst, wobei sich die zwei Hilfsrohrleitungen (340, 345) auf der einen bzw. der anderen Seite der Äquatorialebene (P₂₀) der Verteilungsleitung (20) erstrecken.

4. Verteilungsanordnung (1) nach Anspruch 3, **dadurch gekennzeichnet, dass** sich die zwei Hilfsrohrleitungen (340, 345) symmetrisch in Bezug auf die Äquatorialebene (P₂₀) der Verteilungsleitung (20) erstrecken.

5. Verteilungsanordnung (1) nach einem der vorhergehenden Ansprüche, **dadurch gekennzeichnet, dass** wenigstens eine Einspritzleitung (31-35) einen stromaufseitigen Abschnitt (341, 351) mit konvergenter Form aufweist und dass wenigstens ein Ausgang (340.2, 345.2, 350.2) der Hilfsrohrleitung (310-340, 345, 350) mit der entsprechenden Einspritzleitung (31-35) stromabwärts des stromaufseitigen Abschnitts (341, 351) mit konvergenter Form verbunden ist.

6. Verteilungsanordnung (1) nach einem der vorhergehenden Ansprüche, **dadurch gekennzeichnet, dass** ein so genannter Eintrittswinkel (A_{340.1}; A_{245.1}), der in einer Meridianebene (P_{340.1}), die einen Eingang (340.1, 345.1, 350.1) einer Hilfsrohrleitung (310-340, 345, 350) enthält, zwischen der radialen Richtung (R_{340.1}) senkrecht zu der Drehachse (Y) und dem Segment (O₂₀-340.1), das den Eingang (340.1, 345.1, 350.1) der Hilfsrohrleitung (310-340, 345, 350) mit der Medienachse (C₂₀) der Verteilungsleitung (20) verbindet, gebildet ist, im Bereich von 0° bis 90° liegt.

7. Verteilungsanordnung (1) nach einem der vorhergehenden Ansprüche, **dadurch gekennzeichnet, dass** ein so genannter Austrittswinkel, der in einer Ebene (VII-VII) senkrecht zu der Einspritzrichtung, die einen Ausgang (340.2, 345.2, 350.2) der Hilfsrohrleitung (310-340, 345, 350) enthält, zwischen der Äquatorialebene (P₂₀) der Verteilungsleitung (20) und dem Segment, das den Ausgang (340.2, 345.2, 350.2) der Hilfsrohrleitung (310-340, 345, 350) mit der Medianachse (X₃₄₂) der entsprechenden Einspritzleitung (31-35) verbindet, gebildet ist, im Bereich von 0° bis 45° liegt.

8. Verteilungsanordnung (1) nach einem der vorhergehenden Ansprüche, **dadurch gekennzeichnet, dass** wenigstens eine Hilfsrohrleitung (310-340, 345, 350) eine zylindrische Form mit kreisförmiger Basis hat.

9. Verteilungsanordnung (1) nach einem der vorhergehenden Ansprüche, **dadurch gekennzeichnet, dass** das stromabseitige Ende (I₃₅) der Verteilungsleitung (20) durch eine Abschluss-Einspritzleitung (35) verlängert ist, die mit wenigstens einer Hilfsrohrleitung (310-340, 345, 350) verbunden ist, deren Eingang (340.1, 345.1, 350.1) sich auf dem äußeren Teil der Verteilungsleitung (20) befindet und deren Ausgang (340.2, 345.2, 350.2) sich auf dem inneren Teil der Abschluss-Einspritzleitung (35) befindet, verbunden ist.

10. Pelton-Turbine, die ein Rad (R) umfasst, wobei die Turbine **dadurch gekennzeichnet ist, dass** sie eine Verteilungsanordnung (1) nach einem der vorhergehenden Ansprüche umfasst.

## Claims

1. Distribution assembly (1) for supplying water to a Pelton turbine wheel (R), the distribution assembly (1) comprising:
- a distribution duct (20) with the overall shape of a portion of a torus of which the axis of revolution is substantially parallel to the axis of rotation (Y) of the wheel (R);
- a plurality of injection ducts (31-35) distributed around the location of the wheel (R), the injection ducts (31-35) being arranged in such a way as to inject the water into the buckets of the wheel (R), each injection duct (31-35) being connected to the distribution duct (20);
- at least one auxiliary pipe (310-340, 345, 350); the distribution assembly (1) being **characterized in that** the auxiliary pipe (310-340, 345, 350) comprises an outlet (340.2, 345.2, 350.2) connected to the inner part of an injection duct (31-35) and an inlet (340.1, 345.1, 350.1) connected to the distribution duct (20) directly upstream of the said corresponding injection duct (31-35), between the inlet of this injection duct (31-35) and the inlet (340.1, 345.1, 350.1) of the preceding injection duct (31-35) in the direction of flow of the water.

2. Distribution assembly according to Claim 1, **characterized in that** it comprises one auxiliary pipe for at least one injection duct, the said auxiliary pipe extending close to the equatorial plane of the distribution duct.

3. Distribution assembly (1) according to Claim 1, **characterized in that** it comprises two auxiliary pipes (340, 345) for at least one injection duct (34), the said two auxiliary pipes (340, 345) extending respectively on either side of the equatorial plane (P₂₀) of the distribution duct (20).

4. Distribution assembly (1) according to Claim 3, **characterized in that** the said two auxiliary pipes (340, 345) extend symmetrically with respect to the equatorial plane (P₂₀) of the distribution duct (20).

5. Distribution assembly (1) according to one of the preceding claims, **characterized in that** at least one injection duct (31-35) comprises an upstream portion (341, 351) of convergent shape and **in that** at least one outlet (340.2, 345.2, 350.2) of an auxiliary pipe (310-340, 345, 350) is connected to the corresponding injection duct (31-35) downstream of the said upstream portion (341, 351) of convergent shape.

6. Distribution assembly (1) according to one of the preceding claims, **characterized in that** a so-called inlet angle (A_{340.1}; A_{345.1}), formed in a meridian plane (P_{340.1}) comprising an inlet (340.1, 345.1, 350.1) of an auxiliary pipe (310-340, 345, 350), between the radial direction (R_{340.1}) perpendicular to the axis of rotation (Y) and the segment (O₂₀-340.1) connecting the said inlet (340.1, 345.1, 350.1) of an auxiliary pipe (310-340, 345, 350) to the median axis (C₂₀) of the distribution duct (20), is between 0° and 90°.

7. Distribution assembly (1) according to one of the preceding claims, **characterized in that** a so-called outlet angle, formed in a plane (VII-VII) orthogonal to the injection direction and comprising an outlet (340.2, 345.2, 350.2) of an auxiliary pipe (310-340, 345, 350), between the equatorial plane (P₂₀) of the distribution duct (20) and the segment connecting the said outlet (340.2, 345.2, 350.2) of an auxiliary pipe (310-340, 345, 350) to the median axis (X₃₄₂) of the corresponding injection duct (31-35), is between 0° and 45°.

8. Distribution assembly (1) according to one of the preceding claims, **characterized in that** at least one auxiliary pipe (310-340, 345, 350) has the shape of a cylinder with a circular base.

9. Distribution assembly (1) according to one of the preceding claims, **characterized in that** the downstream end (I₃₅) of the distribution duct (20) is extended by a terminal injection duct (35) connected to at least one auxiliary pipe (310-340, 345, 350) of which the inlet (340.1, 345.1, 350.1) is situated on the outer part of the distribution duct (20) and of which the outlet (340.2, 345.2, 350.2) is situated on the inner part of the terminal injection duct (35).

10. Pelton turbine comprising a wheel (R), the turbine being **characterized in that** it comprises a distribution assembly (1) according to one of the preceding claims.
